Europäisches Patentamt

(19) European Patent Office

Office européen des brevets

(11) Publication number: **0 074 131**
**B1**

# (12) EUROPEAN PATENT SPECIFICATION

(45) Date of publication of patent specification: **05.02.86**

(51) Int. Cl.⁴: **G 11 B 7/08**

(21) Application number: **82200970.0**

(22) Date of filing: **28.07.82**

(54) Swinging-arm device for an optical scanning unit.

(30) Priority: **26.08.81 NL 8103960**

(43) Date of publication of application:
**16.03.83 Bulletin 83/11**

(45) Publication of the grant of the patent:
**05.02.86 Bulletin 86/06**

(84) Designated Contracting States:
**AT BE DE FR GB IT NL SE**

(56) References cited:
**FR-A-2 238 210**
**GB-A-1 036 561**
**GB-A-2 049 259**
**US-A-2 788 215**
**US-A-3 849 800**
**US-A-3 983 317**
**US-A-4 150 407**
**US-A-4 239 942**

**PATENTS ABSTRACTS OF JAPAN, vol. 3, no.
156, 21st December 1979, page 148 E 161;**

(73) Proprietor: **N.V. Philips' Gloeilampenfabrieken
Groenewoudseweg 1
NL-5621 BA Eindhoven (NL)**

(72) Inventor: **Van de Veerdonk, Johannes T.A.
c/o Int.Octrooibureau B.V. Prof.Holstlaan 6
NL-5656 AA Eindhoven (NL)**

(74) Representative: **Smit, Frederik Jan et al
INTERNATIONAAL OCTROOIBUREAU B.V. Prof.
Holstlaan 6
NL-5656 AA Eindhoven (NL)**

(56) References cited:
**IBM TECHNICAL DISCLOSURE BULLETIN, vol.
12, no. 12, May 1970, pages 2160-2161, New
York (USA); R.C. TRESEDER: "Access
mechanism with reset devices"**

**PATENTS ABSTRACTS OF JAPAN, vol. 5, no.
26, 17th February 1981, page 8 P49;**

Courier Press, Leamington Spa, England.

## Description

The invention relates to a swinging-arm device for writing and/or reading recording tracks in an optical disk by means of a radiation beam which is concentrated to form a radiation spot, which device comprises: a stationary mounting; an optical scanning unit comprising a lens system which is movable along an optical axis; a swinging-arm having a first end provided with means for securing the scanning unit to the swinging arm and a second end opposite the first end; a swinging-arm bearing arrangement which pivotally supports the swinging-arm in the mounting for pivotal movement about a pivotal axis situated between the two ends of the swinging arm; coil means connected to the swinging arm for exerting electromagnetic pivotal forces on the arm in a plane perpendicular to the pivotal axis; a permanent magnetic stator comprising permanent stator-magnet means secured to the stationary mounting, which means co-operate with the coil means *via* an air gap; and the centre of mass of the pivotal assembly comprising the swinging arm with the optical scanning unit is disposed on the pivotal axis.

Devices for moving and positioning optical scanning units for the contactless scanning of rotary optical disks are known in various forms. The optical disks may be video disks, rotating at a speed of 1500 or 1800 revolutions per minute, optical data-storage disks, which also rotate at high speed, or optical audio disks, having a diameter of approximately 12 cm, rotating at a speed between approximately 250 and 500 revolutions per minute.

A swinging-arm device of the type mentioned in the preamble, comprising such an optical scanning unit, is for example known from US—A—4,239,942. This swinging-arm device performs a limited rotary movement, which is effected about a pivotal axis which is parallel to the axis of rotation of the optical disk. Due to the comparatively large dimensions and the comparatively high mass of the moving part of the rotary device this device may be susceptible to shocks, that is, if an apparatus in which the swinging-arm device is used is subjected to a shock, this may give rise to undesired movements for the optical scanning unit. The centre of mass of the known pivotal assembly comprising the swinging-arm with the optical scanning unit and a counter weight, adjustable mounted at the second end, can be disposed on the pivotal axis to obtain a minimum damping, but this is difficult to achieve in practice. The known swinging-arm device is used in conjunction with an optical scanning unit equipped with a movable lens system for automatically focussing and maintaining the focussing of a radiation beam on the information surface of the optical disk, the swinging arm being included in an automatic control circuit for automatically following the track of the optical disk, which control circuit corrects tracking errors by small pivotal movements of the whole swinging arm. Tracking errors may occur as a result of incorrect centring of the optical disk on a drive spindle, an eccentric position of the tracks relative to the central aperture of the disk, oscillations of the tracks when the disk is not perfectly perpendicular to the axis of rotation of the drive spindle, and other random influences. In view of the frequency spectrum of the tracking errors the radial tracking system is required to have a dynamic bandwidth of at least 1000 Hz. Moreover, for the pivotal movement of the swinging arm the required power should not be too high in view of the development of heat and the dimensioning of the servo circuits.

The invention aims to provide a swinging-arm device of the type mentioned in the opening paragraph having a large dynamic bandwidth for pivotal movements about the pivotal axis and requiring a comparatively low power for effecting the pivotal movements, and is characterized in that the coil means comprise first and second coil means which are disposed diametrically opposite each other on opposite sides of and at equal distance from the pivotal axis and which exert equal first and second pivotal force on the swinging arm and that the first and second pivotal forces act in one plane perpendicular to the pivotal axis.

Each of these steps in itself serves to prevent undesired forces and moments being exerted on the swinging-arm device. In the absence of undesired forces and moments the arm can be of a less rigid and consequently lighter construction. It has been found that, in comparison with the other parts of the swinging-arm device, the bearing arrangement especially has a low rigidity. Bearing arrangements which meet requirements of freedom from play and low friction can be obtained by the use of axially pre-stressed ball-bearings. The balls are compressed over a very small area so that, at least in the micron range, they are elastically deformable in a comparatively easy manner. In view of the desired large bandwidth it is therefore very important to aim at a minimal bearing load. The smaller the mass of the arm is, the smaller is the bearing load, so that the attainable bandwidth can be larger.

Since the coil means exert a perfect moment about the pivotal axis on the swinging arm no undesired transverse forces are exerted on the swinging-arm bearing arrangement during pivotal movements. As already described, this is important in view of the attainable dynamic bandwidth of the swinging-arm device. However, transverse forces are also undesirable for other reasons, because they may give rise to undesired deformations in the swinging-arm device and consequent displacements of the read spot. Moreover, transverse forces in the swinging-arm bearing arrangement give rise to frictional forces; these also have an adverse effect on the bandwidth. Since the pivotal forces exerted by the coil means act in one plane perpendicular to the pivotal axis, no moments are exerted on the swinging arm about an axis perpendicular to the pivotal axis, which moments could give rise to transverse reaction forces in the swinging-arm bearing arrangement.

Also, in one embodiment the centre of mass of the swinging-arm device is arranged in the said one plane in which the two pivotal forces act. The advantage of this is that dynamic torsional deformations about the pivotal axis owing to the moments exerted are minimized.

It is further known from US—A—4,239,942 to provide a swinging-arm device with a swinging-arm bearing arrangement, comprising two bearings which are disposed on opposite sides of the swinging arm. A further embodiment is characterized in that said two bearings are located at substantially equal distances from the centre mass of said pivotal assembly. This ensures that both bearings are subject to substantially equal transverse-force loads, so that neither of the bearings is subjected to a load which is heavier than necessary.

It is also of advantage to employ a further embodiment which is characterized in that: the two bearings comprise ball-bearings; the swinging-arm bearing arrangement comprises a resilient support for one of the two ball-bearings, which supports present a higher resistance to forces perpendicular to the pivotal axis and to moments about the pivotal axis than forces directed along or parallel to the pivotal axis and to moments about axes perpendicular to the pivotal axis; and the resilient support is secured to the frame in an axial pre-stressed condition, so that the two ball-bearings are urged axially towards one another.

Owing to the resulting absence of play in the bearings the bearings cannot adversely affect the attainable bandwidth. Owing to the flexibility of the resilient bearing support about the said moment axes alignment errors between the two ball-bearings can be compensated for elastically and without play.

A swinging arm in accordance with the invention may be driven in a manner similar to that known from swinging-arm devices for moving and positioning a magnetic head over the surface of a magnetic storage disk. Such known swinging-arm devices sometimes employ a flat coil which is disposed in the plane of the swinging arm and which moves in an axial permanent-magnetic field between flat permanent magnets arranged at a small distance from the flat coil, parallel to the plane of the swinging arm. The magnetic head is suspended in a system of weak springs so that small flexural deformations of the swinging arm have substantially no influence on the position of the magnetic head above the surface of the magnetic disk. In swinging-arm devices which co-operate with an optical disk flexural deformations in the swinging-arm device give rise to focussing errors of the light spot. The resistance to flexural deformations consequently affects the bandwidth of the automatic focussing control system. An embodiment of the invention which provides a swinging arm having higher bending resistance but which combines all the advantages of the previous embodiments, is characterized in that: the swinging arm has at least substantially the shape of a bar of rectangular cross-section, the two long sides of the rectangle being parallel to the pivotal axis, so that the bar comprises two side surfaces, an upper surface to be directed towards the optical disk and a lower surface opposite the last-mentioned surface, the side surfaces having a height greater than the width of the upper and lower surfaces; the swinging arm is formed with first and second apertures which are disposed on opposite sides of the pivotal axis and which extend through the side surfaces; the first and second coil means are mounted in the first and second apertures respectively, and the stator is provided with first and second permanent stator magnets each having the shape of an arc of a circle, which magnets extend through the first and second apertures respectively. By having the arcuate stator magnets extending through the apertures in the swinging arm a highly compact but nevertheless easy-to-assemble device can be obtained,

In order to obtain a large dynamic bandwidth it is important that, as already stated, the pivotal mass of the swinging-arm device is sufficiently small. However, reducing the dimensions of the swinging arm is only possible to a limited extent, the limits imposed depending on the type of means used for keeping the read spot positioned on the information track to be read. As is known, optical disk players comprise at least two automatic control systems, namely a focussing control system and a tracking control system. The focussing control system serves to keep the light spot automatically focussed on the information surface and to automatically correct possible error. The tracking control system serves for automatically eliminating deviations from the position of the light spot in the plane of the information surface and transverse to the direction of the information track.

For tracking purposes the optical read unit is equipped with an opto-electronic measuring unit, which measures deviations of the read spot in directions transverse to the information track. Since the information tracks are substantially concentric with the axis of rotation of the optical disk, said deviations may be referred to as "radial-position errors" of the light spot. In a swinging-arm device the light spot follows an arcuate scanning track over the information surface of the optical disk. Consequently, the read spot does not move over the information surface in a purely radial direction. The degree of curvature of the scanning path of the read spot increases as the distance between the optical read unit and the pivotal axis of the swinging-arm device decreases. The deviations between the movements of the read spot relative to the track and the desired radial direction of movement will increase as the degree of curvature increases. The measuring device for measuring the radial-position errors has a limited sensitivity, so that the sensitivity of said measuring device imposes a specific limit on the maximum permissible error. In swinging-arm devices for scanning optical disks this leads to a problem which greatly resembles the problems encountered with pick-up arms of record players. In record players this is referred to as a "tracking-angle error", which is the angle formed by the radius and the tangent to the arcuate scanning path followed by the stylus of the pick-up head at the point of scanning of the groove in the gramophone record. A large amount of literature is available on the subject of determining the most suitable scanning path for the stylus of the pick-up head over the gramophone record. Reference may be made, for example to the article "Tracking Angle" by B. B. Bauer in the magazine Electronics, March 1945, pages 110 to 115.

In the case of the swinging-arm devices for optical disk players it is also possible to speak of a tracking-angle error. This error may be defined as the angle, at the point where the light spot illuminates the information surface, between the radius and a tangent to the arcuate scanning path. Larger tracking-angle errors are permissible as the sensitivity of the measuring device for measuring the radial-position error of the read spot relative to the track increases. An example of this is an opto-electronic measuring device using a beam splitter which splits a light beam which has been reflected by the information surface into two sub-beams which each co-operate with two photodiodes, the output signals of the photodiodes being added to each other and being subtracted from each other in a suitable manner· in order to obtain an output signal which is a measure of displacements of the read spot in a radial direction relative to the information track, a maximum tracking angle error of 20° being regarded as permissible. When this value is permissible, the most suitable scanning path can be selected by means of said known theory, that is, that scanning path for which a minimal known distance between the read spot and the pivotal axis of the swinging arm is obtained and for which the tracking angle errors never exceed the maximum permissible value.

In practice this may mean that the scanning path extends from a point on the outer diameter of the information surface to a point on the inner diameter of the information surface, which points are shifted tangentially relative to each other, that is the relevant points are disposed on different radii which enclose a certain angle. This is also customary in record players.

A preferred embodiment of the invention will now be described in more detail, by way of example, with reference to the drawing, in which:

Figure 1 is a plan view of an optical audio disk player drawn to substantially full scale,

Figure 2 is a sectional view, taken on the line II—II in Figure 1 and drawn to a larger scale, of a part of the optical disk player of Figure 1, the swinging-arm device being partly shown in elevation,

Figure 3 is a plan view of the swinging-arm device shown in Figure 2,

Figure 4 is a cross-sectional view of the swinging-arm device, taken on the line IV—IV in Figure 3,

Figure 5 is a side view of the actual swinging-arm of the device,

Figure 6 is an underneath view of the swinging arm of Figure 5,

Figure 7 is an underneath view of a main portion of the mounting of the swinging-arm device,

Figure 8 is a sectional view taken on the line VIII—VIII in Figure 7,

Figure 9 is a sectional view taken on the line IX—IX in Figure 7,

Figures 10, 11 and 12 are a transverse sectional view, a plan view and a side elevation respectively of a coil for the swinging-arm drive,

Figures 13 and 14 are a plan view and a side elevation of an arcuate permanent magnet arranged on a semi-circular iron yoke portion of a permanent magnetic stator of the swinging arm device, and

Figures 15 and 16 show a resilient bearing support in plan and sectional views respectively.

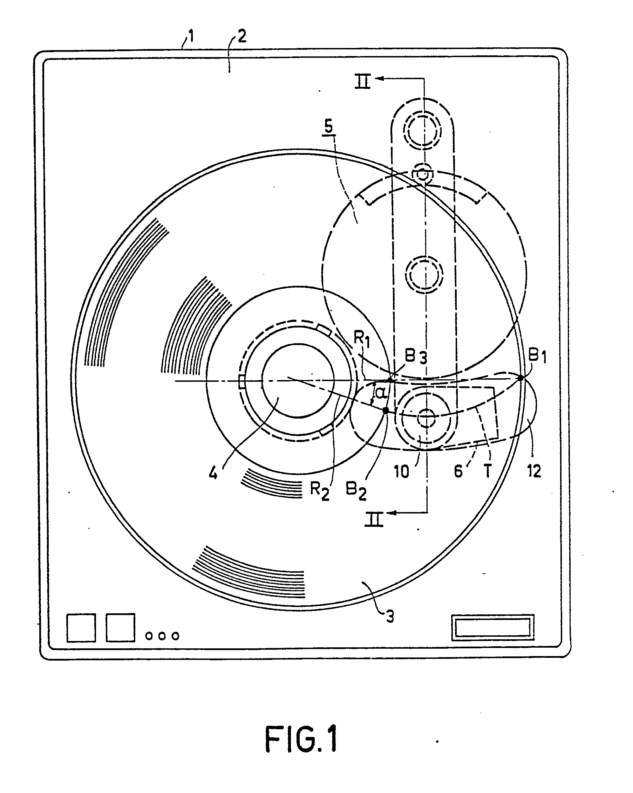

The optical audio-disk player shown in Figure 1 comprises a lower cabinet section 1 with a deck 2. An optical audio disk 3 having a diameter of approximately 120 mm rotates on a spindle 4 in a plane of rotation which is parallel to the deck 2. The disk is read in the reflection mode by an optical scanning unit 6 with the aid of a swinging-arm device 5. The axis of rotation 7 of the spindle 4, the pivotal axis 8 of the swinging-arm device 5 and the optical axis 9 of a movable lens system 10 of the optical scanning unit 6 are parallel to each other and extend substantially perpendicularly to the deck 2. The spindle 4 is driven by an electric motor 11. The lens system 10 projects slightly from the deck 2 through a slot 12. The scanning unit 6 comprises a semiconductor laser as a light source and all the optical and opto-electronic means required for reading and processing the optical information on the disk 3. As the nature and construction of the scanning unit are irrelevant to the present invention, the scanning unit will not be described in more detail. The lens system 10 concentrates a laser beam 13 to form a read spot 14 on the information surface disposed on the upper side of the optical disk 3, which is transparent except for said information surface.

The swinging-arm device comprises a stationary mounting with a disc-shaped main portion 15. A swinging arm 16 has a first end 17 with clamping means for the optical scanning unit 6 and a second end 18 carrying a counterweight 19. A swinging-arm bearing arrangement for the pivotal movement of the swinging arm 16 about the pivotal axis 8 comprises two ball-bearings 20 and 21 arranged above and below the swinging arm. The ball-bearing 20 is mounted in the main mounting portion 15 and the ball-bearing 21 is mounted in a resilient support 22. Further, the bearing arrangement comprises a bearing bolt 23 having a head 24 and a threaded portion 25 onto which a nut 26 is fitted. The inner races of the ball-bearings 20 and 21 and the swinging arm 16 are retained between the nut 26 and the head 24.

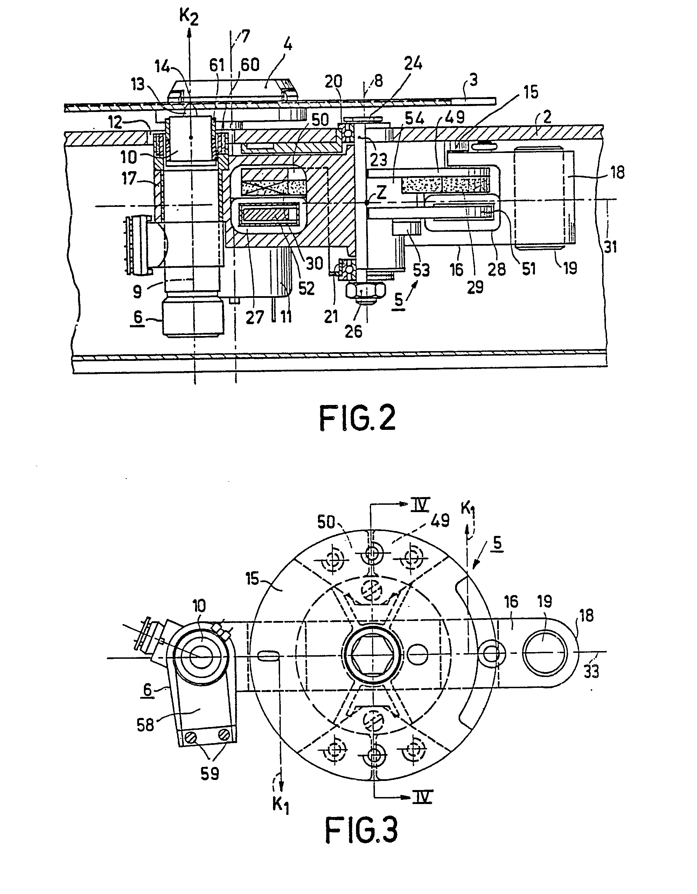

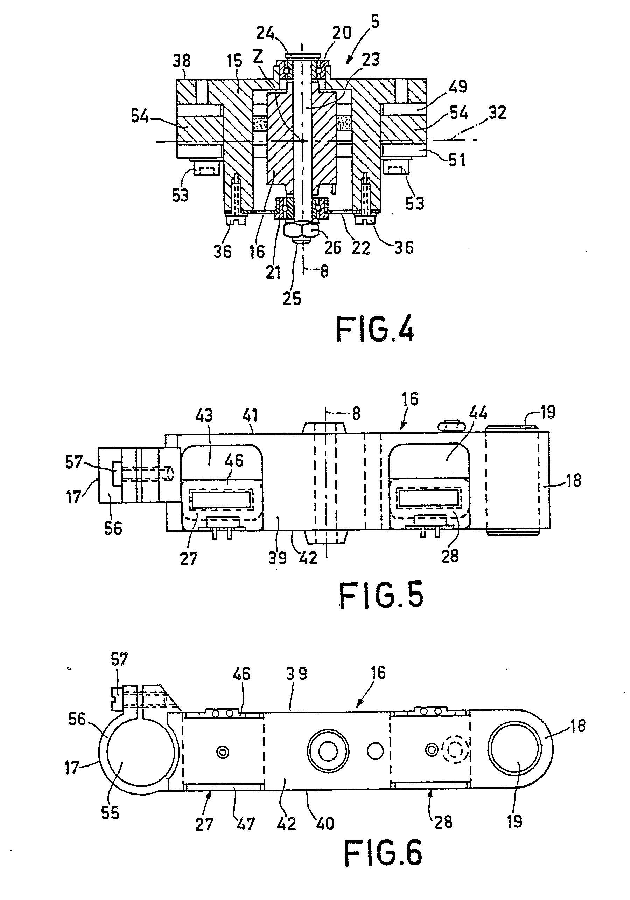

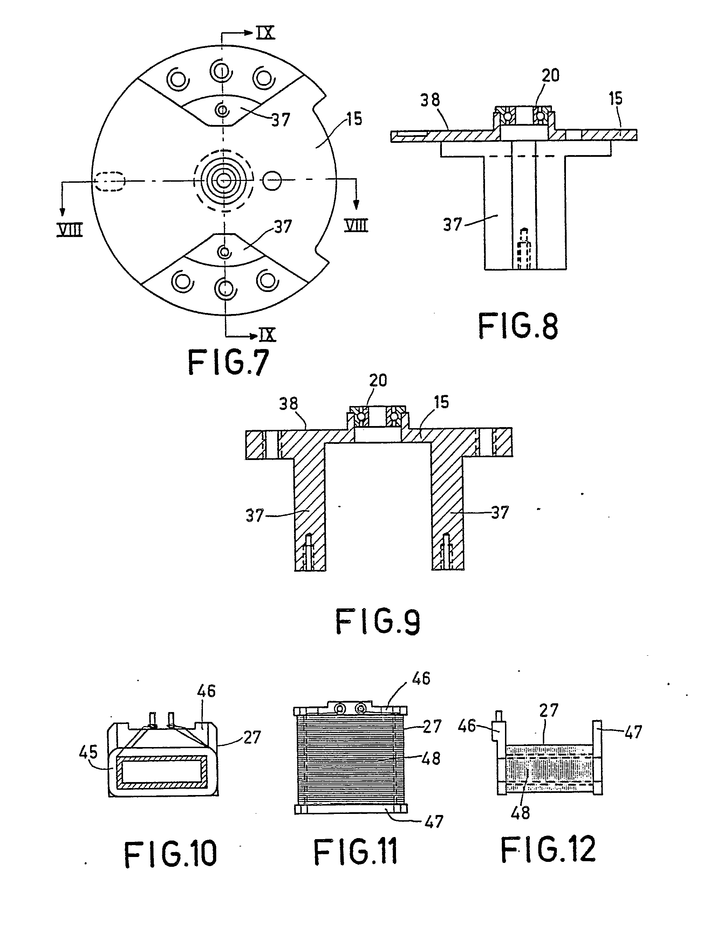

For the radial movement of the read spot 14 over the information surface of the optical disk there are provided two coils 27 and 28 and permanent magnets 29 and 30. These magnets co-operate with the two coils *via* an air gap. The coils are so wound and the magnets are so magnetized that each coil exerts an electromagnetic pivotal force on the swinging arm in a plane perpendicular to the pivotal axis 8 (see Figs. 10—14). The centre of mass Z of the pivotal assembly comprising mainly the swinging arm 16 with the optical scanning unit *6*, the counterweight 19 and the two coils 27 and 28, is disposed on the pivotal axis 8. For pivotal movements about the pivotal axis 8 the mass moment of inertia of that part of the pivotal assembly which extends in the direction of the first end 17 of the swinging arm is equal to the mass moment of inertia of the part which extends in the direction of the second end 18. The coils 27 and 28 are disposed diametrically opposite each other on opposite sides of and at equal distances from the pivotal axis 8. They exert equal variable pivotal forces $K_1$ on the swinging arm (see Figure 3). These pivotal forces act in a plane passing through the centre of mass Z and perpendicular to the pivotal axis 8. This plane intersects the plane of the drawing along a line 31 in Figure 2 and along a line 32 in Figure 4. In the embodiment shown the two forces $K_1$ are equal to each other and act tangentially relative to the pivotal axis 8, so that substantially no transverse force components are exerted on the bearings. The two forces are applied at equal distances from the pivotal axis 8, so that they produce pivoting moments of equal magnitude and direction. The points of application of the forces are disposed close to the parts of the swinging-arm device having the largest mass, that is, the scanning unit 6 and the counterweight 19. This has the advantage of a low dynamic flexural deformation of the swinging arm 16. In the ideal case the pivotal forces would act in the centres of gravity of the principal masses, that is, in the centres of gravity of the scanning unit 6 and of the counterweight 19. However, this is difficult to achieve in practice.

The two ball-bearings 20 and 21 are disposed at equal axial distances from the centre of mass Z. The optical axis 9 of the movable lens system 10 is disposed in a plane of symmetry of the swinging arm 16 which contains the pivotal axis 8. This plane of symmetry intersects the plane of the drawing along a line 33 in Figure 3. A variable focussing force $K_2$ (see Figure 2) which is exerted on the lens system 10 for focussing purposes by means to be described hereinafter, consequently acts in the said plane of symmetry. The focussing force therefore does not produce any undesired dynamic torsional moments in the swinging arm 16, the swinging arm being subjected only to a bending load by the force $K_2$. The variable reaction forces occurring in the ball-bearings 20 and 21 are equal to each other because, as already stated, the centre of mass Z of the pivotal assembly is disposed midway between the two ball-bearings.

The ball-bearing 21 is mounted in the resilient support 22. This support comprises an extruded hollow cylindrical portion 34 for receiving the outer race of the ball-bearing 21, which cylindrical portion is connected to four radially extending strip-shaped members 35. This ensures that the resilient support presents a higher resistance to forces perpendicular to the pivotal axis 8 and moments about the pivotal axis 8 that to forces directed along or parallel to the pivotal axis 8 and moments acting about axes perpendicular to the pivotal axis. By means of two screws 36 the bearing support is secured in an axially pre-stressed condition to two portions 37 of the swinging-arm mounting which extend downwardly from the main portion 15. When the bearing arrangement is mounted the bracket 22 is shifted until the optical axis of the lens system is exactly perpendicular to the mounting face 38 on the upper side of the swinging-arm mounting (see Figures 4, 8 and 9). Possible alignment errors of the two bearings 20 and 21 relative to each other are compensated for by the resilient action of the support 22 and the axial pre-stress in the support, which pre-stress urges the bearings 20 and 21 axially towards one another, eliminates any bearing play.

As can be seen in Figures 5 and 6, the swinging arm 16 has substantially the form of a bar of rectangular cross-section, the two long sides of the rectangle being parallel to the pivotal axis 8, so that the bar comprises two side surfaces 39 and 40, an upper surface 41 to be directed towards the optical disk 3, and a lower surface 42 opposite the last-mentioned surface. The side surfaces 39 and 40 have a height which is greater than the width of the upper and lower surfaces. The swinging arm is formed with two apertures 43 and 44 which are disposed on opposite sides of and at equal distances from the pivotal axis 8 and which extend through the side surfaces 39 and 40. The coils 27 and 28 are accommodated in these two apertures. Figures 10 to 12 show only one of the coils, namely the coil 27, the coil 28 being identical to the coil 27. Each coil comprises a coil former with end flanges 46 and 47. The turns of the coil lie between the flanges. The width of the coil is such that it fits exactly in the aperture in the swinging arm, the arm being locally recessed on both sides to receive the flanges 46 and 47.

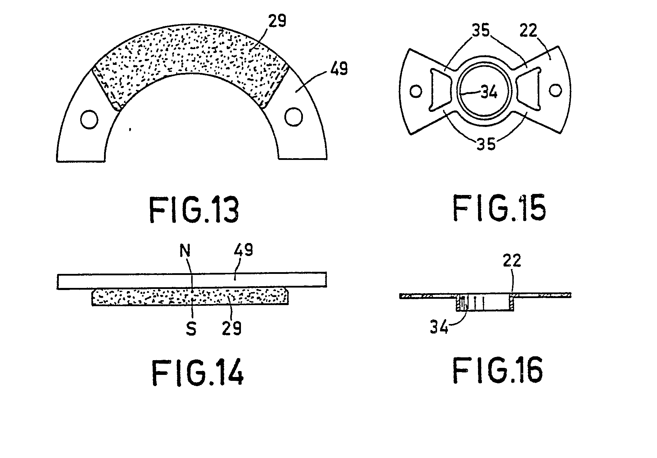

The permanent magnets 29 and 30 each have the shape of an arc of a circle and extend through the apertures 43 and 44 respectively. Figures 13 and 14 show the permanent stator magnet 29. This magnet is glued onto a semicircular iron yoke member 49. The permanent magnet 30, which is identical to the magnet 29, is glued onto a similar yoke member 50. Identical semicircular yoke members 51 and 52 extend through the coils 27 and 28. In the present embodiment the stator magnets are axially magnetized. The yokes 49 to 52 are secured to the swinging-arm mounting by means of bolts 53, with iron spacing elements 54 interposed between the yokes of each pair of associated yokes. The field of the permanent magnet 29 extends axially towards the iron yoke member 51, *via* the air gap in which the turns of the coil 28 are disposed. The field is closed *via* the iron spacing element 54 and the iron yoke member 49. The field of the permanent magnet 30 extends in a similar way.

Near its end 17 the swinging arm 16 comprises a clamping device for mounting the scanning unit 6. This ensures easy and rapid exchangeability of said unit. The swinging arm has a cylindrical bore 55 in which the scanning unit can be mounted. The bore 55 is formed in a clamping ring 56 which can be tightened around the scanning unit by means of a screw 57.

The lens system 10 is movable along the optical axis 9 and is suspended in two leaf springs 58, of which the lower one is visible in Figure 3. These leaf springs are secured to the body of the scanning unit by screws 59 and always remain parallel to each other, so that the optical axis 9 is not subject to pivotal movements during the focussing movements of the lens system. The leaf springs extend substantially tangentially relative to the pivotal axis 8 of the swing arm. Pivotal movements of the swinging arm consequently subject the leaf springs to tensile and compressive loads. The leaf springs present a particularly high resistance to tensile and compressive loads, so that the pivotal movements hardly influence a correct operation. For driving the lens system there is provided an annular focussing coil 60, which co-operates with a permanent magnet system 61 which is coaxially mounted on the lens system.

As is shown in Figure 1, the scanning path T of the read spot is an arc of circle, which extends between an outer point $B_1$ and an inner point $B_2$ situated on a radius $R_1$ and a radius $R_2$ respectively, each of which has its origin on the axis of rotation 7 of the spindle 4. The angle $\alpha$ between the radii $R_1$ and $R_2$ is approximately 18°. In comparison with a scanning path between the point $B_1$ and a point $B_3$ situated on the radius $R_1$ the distance between the optical axis 9 of the scanning unit and the pivotal axis 8 is then reduced by a factor 1t.

The reference signs in the claims, relating to the drawings, are not limiting the interpretation of the claims, but are only included with intention of clarification.

**Claims**

1. A swinging-arm device for writing and/or reading recording tracks in a recording surface of a rotary optical disk by means of a radiation beam (13) which is concentrated to form a radiation spot (14), which device comprises:
— a stationary mounting (15),
— an optical scanning unit (6) comprising a lens system (10) which is movable along an optical axis (9),
— a swinging arm (16) having a first end provided with means for securing the scanning unit (6) to the swinging arm and a second end opposite the first end,
— a swinging arm bearing arrangement (20—26) which pivotally supports the swinging arm in the mounting for pivotal movement about a pivotal axis (8) situated between the two ends (17, 18) of the swinging arm,
— coil means (27, 28) connected to the swinging arm for exerting electromagnetic pivotal forces on the arm in a plane perpendicular to the pivotal axis (8), and
— a permanent magnetic stator comprising permanent stator-magnet means (29, 30) secured to the stationary mounting, which means co-operate with the coil means *via* an air gap,
— the centre of mass (Z) of the pivotal assembly comprising the swinging arm (16) with the optical scanning unit (6) is disposed on the pivotal axis (8),
characterized in that,
— the coil means (27, 28) comprise first and second coil means which are disposed diametrically opposite each other on opposite sides of and at equal distances from the pivotal axis (8) and which exert equal first and second pivotal forces $(K_1)$ on the swinging arm, and
— the first and second pivotal forces $(K_1)$ act in one plane perpendicular to the pivotal axis.

2. A swinging-arm device as claimed in Claim 1, characterized in that the centre of mass (Z) of said pivotal assembly is disposed in the said one plane.

3. A swinging-arm device as claimed in Claim 1, in which the swinging-arm bearing arrangement (20—26) comprises two bearings which are disposed on opposite sides of the swinging arm (16), characterized in that said two bearings (20, 21) are located at substantially equal distances from the centre of mass (Z) of said pivotal assembly.

4. A swinging-arm device as claimed in Claim 3, characterized in that
— the two bearings comprise ball-bearings (20, 21),
— the swinging-arm bearing arrangement comprises a resilient support (22) for one of the two ball-bearings (21) which support presents a higher resistance to forces perpendicular to the pivotal axis (8) and to moments about the pivotal axis than to forces directed along or parallel to the pivotal axis and to moments about axes perpendicular to the pivotal axis, and
— the resilient support is secured to the frame in an axially pre-stressed condition, so that the two ball-bearings are urged axially towards one another.

5. A swinging-arm device as claimed in Claim 1, characterized in that
— the swinging-arm (16) has at least substantially the shape of a bar of rectangular cross-section, the two long sides of the rectangle being parallel to the pivotal axis (8), so that the bar comprises two side surfaces (39, 40) an upper surface (41) to be directed towards the optical disk (3), and a lower surface (42) opposite the last-mentioned surface, the side surfaces having a height which is greater than the width of the upper and lower surfaces,

— the swinging-arm is formed with first and second apertures (43, 44) which are disposed on opposite sides of the pivotal axis (8) and which extend through the side surfaces (39, 40),

— the first and second coil means (27, 28) are mounted in the first and second apertures (43, 44) respectively, and

— the stator is provided with first and second permanent stator magnets (29, 30) each having the shape of an arc of a circle which magnets extend through the first and second apertures (43, 44) respectively.

6. A swinging-arm device as claimed in Claim 1, characterized in that the optical axis (9) of the movable lens system is disposed in a plane of symmetry of the swinging-arm (16) which contains the pivotal axis (8) of the swinging arm.

7. A swinging-arm device as claimed in Claim 1, in which the movable lens system is suspended in parallel leaf springs, characterized in that the leaf springs extend substantially tangentially relative to the pivotal axis.

**Patentansprüche**

1. Schwenkarmvorrichtung zum mit Hilfe eines zu einem Strahlungsflecken (14) konzentrierten Strahlungsbündels (13) Einschreiben und/oder Auslesen von Aufzeichnungsspuren in einer Aufzeichnungsfläche einer sich drehenden optischen Platte mit:

— einem ortsfesten Gestell (15)

— einer optischen Abtasteinheit (16) mit enem entsprechend einer optischen Achse (9) beweglichen Linsensystem (10),

— einem Schwenkarm (16) mit einem ersten Ende mit Mitteln zum Befestigen der Abtasteinheit (6) und mit einem zweiten Ende gegenüber dem ersten Ende,

— einer Schwenkarmlagerung (20—26) zum schwenkbaren, um eine Schwenkachse (8) zwischen den beiden Enden (17, 18) Lagern des Schwenkarms.

— mit dem Schwenkarm verbundenen Spulenmitteln (27, 28) zum Ausüben elektromagnetischer Schwenkkräfte in einer Ebene senkrecht zu der Schwenkachse (8) und

— einem dauermagnetischen Ständer mit auf dem Gestell befestigten dauermagnetischen Ständermagnetmitteln (29, 30), die über einen Luftspalt mit den Spulenmitteln zusammenarbeiten, wobei

— der Massenschwerpunkt (Z) des schwenkbaren Ganzen, das aus dem Schwenkarm (16) mit der optischen Abtasteinheit (6) besteht, auf der Schwenkachse (8) liegt, dadurch gekennzeichnet dass

— die Spulenmittel (27, 28) aus ersten und zweiten Spulenmitteln bestehen, die in bezug auf die Schwenkachse (8), diamitral in gleichen Abständen gegenübereinander auf beiden Seiten der Schwenkachse liegen und gleiche erste und zweite Schwenkkräfte (K1) ausüben und

— die ersten und zweiten Schwenkkräfte (K1) in einer einzigen Ebene senkrecht zur Schwenkachse liegen.

2. Schwenkarmvorrichtung nach Anspruch 1, dadurch gekennzeichnet, dass der Massensschwerpunkt (Z) des genannten schwenkbaren Ganzen in der genannten einzigen Ebene liegt.

3. Schwenkarmvorrichtung nach Anspruch 1, wobei die Schwenkarmlagerung (20—26) zwei Lager umfasst, eins auf jeder Seite des Schwenkarms (16), dadurch gekennzeichnet, dass die zwei Lager (20, 21) in im wesentlichen gleichen Abständen vom Massenschwerpunkt (Z) des genannten schwenkbaren Ganzen liegen.

4. Schwenkarmvorrichtung nach Anspruch 3, dadurch gekennzeichnet,

— dass die beiden Lager aus Kugellagern (20, 21) bestehen,

— dass die Schwenkarmlagerung eines Federbügel (22) enthält zum Befestigen eines der beiden Kugellager (21) und mit einer grösseren Starrheit für Kräfte senkrecht zu der Schwenkachse (8) und für Momente um Achsen senkrecht zu der Schwenkachse und

— dass der Federbügel unter axialer Vorspannung auf dem Gestell befestigt ist, so dass die beiden Kugellager axial aufeinander hin belastet sind.

5. Schwenkarmvorrichtung nach Anspruch 1, dadurch gekennzeichnet,

— dass der Schwenkarm (16) wenigstens nahezu die Form eines Balkens mit einem rechtwinkligen Querschnitt hat, dessen lange Seiten sich parallel zu der Schwenkachse (8) erstrecken, do dass der Balken zwei Seidenflächen (39, 40), eine der optischen Platte (3) zugewandte obere Fläche (41) und eine gegenüberliegende untere Fläche (42) aufweist, wobei die Seitenflächen höher sind als die Breite der oberen und unteren Flächen,

— dass der Schwenkarm mit auf beiden Seiten der Schwenkachse (8) liegenden und durch die Seitenwände (39, 40) hindurchgehenden ersten und zweiten Öffnungen (43, 44) versehen ist,

— dass die ersten und zweiten Spulenmittel (27, 28) in den ersten und zweiten Öffnungen (43, 44) angeordnet sind und

— dass der Ständer mit durch die erste und die zweite Öffnung (43, 44) hindurchragenden ersten und zweiten kreissegmentförmigen, dauermagnetischen Ständermagneten (29, 30) versehen ist.

6. Schwenkarmvorrichtung nach Anspruch 1, dadurch gekennzeichnet, dass die optische Achse (9) des beweglichen Linsensystems in einer Symmetrieebene des Schwenkarms (16) durch die Schwenkachse (8) des Schwenkarms liegt.

7. Schwenkarmvorrichtung nach Anspruch 1, wobei das bewegliche Linsensystem in parallelen Blattfedern hängt, dadurch gekennzeichnet, dass die Blattfedern sich in bezug auf die Schwenkachse im wesentlichen tangentiell erstrecken.

**Revendications**

1. Dispositif à bras pivotant pour enregistrer et/ou lire des pistes d'enregistrement dans une surface d'enregistrement d'un disque optique rotatif au moyen d'un faisceau de rayonnement (13) qui est concentré pour former un spot de rayonnement (14), ce dispositif comprenant:
— un élément de montage fixe (15),
— une unité de balayage optique (6) comprenant un système de lentilles (10) qui est mobile le long d'un axe optique (9),
— un bras pivotant (16) comportant une première extrémité pourvue de moyens destinés à fixer l'unité de balayage (6) au bras pivotant et une seconde extrémité opposée à la première,
— un dispositif de pivotement pour le bras pivotant (20—26) qui supporte à pivot le bras pivotant dans l'élément de montage de manière qu'il puisse pivoter autour d'un axe de pivotement situé entre ses deux extrémités (17, 18),
— des bobines (27, 28) connectées au bras pivotant pour exercer des forces de pivotement électro-magnétiques sur le bras dans un plan perpendiculaire à l'axe de pivotement (8), et
— un stator magnétique permanent comprenant des aimants de stator permanents (29, 30) fixés à l'élément de montage fixe, ces aimants coopérant avec les bobines par l'intermédiaire d'un entrefer,
— le centre de masse (Z) de l'équipage pivotant comprenant le bras pivotant (16) avec l'unité de balayage optique (6) étant disposé sur l'axe de pivotement (8),
caractérisé en ce que,
— les bobines (27, 28) comprennent une première et une seconde bobine qui sont disposées diamétralement l'une en face de l'autre de part et d'autre de l'axe de pivotement (8) et à égales distances de celui-ci et qui exercent une première et une seconde force de pivotement de la même valeur ($K_1$) sur le bras pivotant, et
— la première et la seconde force de pivotement ($K_1$) agissent dans un plan perpendiculaire à l'axe de pivotement.

2. Dispositif à bras pivotant suivant la revendication 1, caractérisé en ce que le centre de masse (Z) de l'équipage pivotant est disposé dans le dit premier plan.

3. Dispositif à bras pivotant suivant la revendication 1, dans lequel le dispositif de pivotement pour le bras pivotant (20 à 26) comprend deux paliers qui sont disposés de part et d'autre du bras pivotant (16), caractérisé en ce que les deux paliers (20, 21) sont disposés en substance à égales distances du centre de masse (Z) de l'équipage pivotant.

4. Dispositif à bras pivotant suivant la revendication 3, caractérisé en ce que:
— les deux paliers sont des roulements à billes (20, 21),
— le dispositif de pivotement pour le bras pivotant comprend un support élastique (22) pour un des roulements à billes (21), ce support offrant une résistance plus élevée aux forces perpendiculaires à l'axe de pivotement (8) et aux moments centrés sur l'axe de pivotement qu'aux forces dirigées le long de l'axe de pivotement ou parallelement à celui-ci et aux moments centrés autour d'axes perpendiculaires à l'axe de pivotement, et
— le support élastique est fixé au châssis dans un état précontraint de sorte que les deux roulements à billes sont sollicités axialement l'un vers l'autre.

5. Dispositif à bras pivotant suivant la revendication 1, caractérisé en ce que:
— le bras pivotant (16) a au moins en substance la forme d'une barre de section transversale rectangulaire, les deux longs côtes du rectangle étant parallèles à l'axe de pivotement (8) de sorte que la barre comprend deux surfaces latérales (39, 40), une surface supérieure (41) orientée vers le disque optique (3) et une surface inférieure (42) opposée à la surface mentionnée en dernier lieu, les surfaces latérales ayant une hauteur qùi est supérieure à la largeur des surfaces supérieure et inférieure,
— le bras pivotant présente une première et une seconde ouverture (43, 44) qui sont disposées de part et d'autre de l'axe de pivotement (8) et qui s'étendent à travers les surfaces latérales (39, 40),
— la première et la seconde bobine (27 et 28) sont montées respectivement dans la première et dans la seconde ouverture (43, 44), et
— le stator est pourvu d'un premier et d'un second aimant de stator permanent (29, 30) ayant chacun la forme d'un arc de cercle, ces aimants traversant respectivement la première et la seconde ouverture (43, 44).

6. Dispositif à bras pivotant suivant la revendication 1, caractérisé en ce que l'axe optique (9) du système de lentilles mobile est disposé dans un plan de symétrie du bras pivotant (16) qui passe par l'axe de pivotement (8) du bras pivotant.

7. Dispositif à bras pivotant suivant la revendication 1, dans lequel le système de lentilles mobile est suspendu dans des lames de ressort parallèles, caractérisé en ce que les lames de ressort s'étendent en substance tangentiellement à l'axe de pivotement.

FIG.1

FIG.2

FIG.3

FIG.4

FIG.5

FIG.6

FIG.7

FIG.8

FIG.9

FIG.10

FIG.11

FIG.12

FIG.13

FIG.15

FIG.14

FIG.16